# EUROPÄISCHE PATENTSCHRIFT

(11) **EP 0 450 403 B1**
(45) Veröffentlichungstag und Bekanntmachung des Hinweises auf die Patenterteilung: **16.08.1995**
(21) Anmeldenummer: 91104347.9
(22) Anmeldetag: 20.03.1991
(51) Int. Cl.: C08K 13/02, C08K 3/04, C08K 5/3492, C08L 75/04, C08G 18/08

(54) **Verfahren zur Herstellung eines flammwidrigen elastischen Polyurethan-Weichschaumstoffes**
Process for the production of a flame retardant elastic polyurethan soft foam
Procédé de préparation d'une mousse de polyuréthane souple, élastique et résistant à la flamme

(30) Priorität: 03.04.1990 DE 4010752
(43) Veröffentlichungstag der Anmeldung: 09.10.1991
(73) Patentinhaber: METZELER SCHAUM GMBH, D-87700 Memmingen (DE)
(72) Erfinder: Heitmann, Ulrich, Dr., D-8940 Memmingen (DE); Rossel, Heribert, D-8941 Buxheim (DE)
(74) Vertreter: Seibert, Hannelore

(56) Entgegenhaltungen:
- EP-A- 0 192 888
- EP-A- 0 400 402
- GB-A- 2 163 762
- US-A- 4 225 645
- DATABASE CHEMICAL ABSTRACTS, Band 114, Nr. 6, 11. Februar 1991, Zusammenfassung Nr. 44602z, Columbus, Ohio, US; & JP-A- 2 215 857

## Beschreibung

Die Erfindung bezieht sich auf ein Verfahren zur Herstellung eines flammwidrigen, elastischen Polyurethan-Weichschaumstoffes aus einem Schaumstoff-Reaktionsgemisch mit einem Polyol und Polyisocyanat sowie einem Anteil an Blähgraphit in einer Korngröße von 0.2-1 mm als flammhemmendes Mittel.

Flexible Polyurethan-Schäume sind in der Regel leicht brennbar, insbesondere auch, weil das organische Material eine sehr hohe spezifische Oberfläche aufweist. Es sind daher auch eine Reihe von Verfahren bekannt, nach denen durch Zusätze zum Schaumstoff-Reaktionsgemisch sowie durch Nachbehandlung des fertigen Schaumstoffs die Entflammbarkeit herabgesetzt werden soll. Hierbei handelt es sich um eine Vielzahl von Verbindungen, die insbesondere Phosphor und Halogen im Molekül aufweisen.

Durch das steigende Sicherheitsbedürfnis sind eine Reihe von Vorschriften entstanden, die die Zulassung von brennbaren Materialien für bestimmte Anwendungen einschränken oder ganz verbieten. Für eine mögliche Zulassung sind eine Reihe von Prüfkriterien entwickelt worden, die entweder auf einer hohen relativ kurzzeitigen Belastung aufgebaut sind, wie z.B. der Test nach FAR 25853 C, bei dem Schaumstoff kurzzeitig mit einem Kerosinbrenner beflammt wird, oder aber auf einer länger dauernden Beflammung des Materials beruhen, z.B. dem UIC-Test, bei dem 100 Gramm Papier als Kissen zusammengeballt und auf dem zu untersuchenden Material verbrannt werden. Dabei wird die Auswirkung auf den Gewichtsverlust, d.h. der Anteil des verbrannten Materials ermittelt sowie ein ggfs. eintretender Schwelprozeß beurteilt, der ohne Flamme abläuft oder erst nach gewisser Zeit durch Selbstentzündung wieder als offene Flamme in Erscheinung treten kann. Dies ist besonders bei flexiblen Polyurethan-Schäumen gefährlich, da die Pyrolyse des Schaumstoffes bei höheren Temperaturen exotherm abläuft.

Flammschutzmittel als solche sind in großer Anzahl in der Literatur beschrieben. Hierbei sind besonders hervorzuheben die GB-PS 2168706, die die Verwendung von Blähgraphit beschreibt oder die GB-A-2177405, in der Melamin als Flammschutzmittel genannt ist. Diese Materialien können zur Erfüllung bestimmter Vorschriften erfolgreich eingesetzt werden, versagen jedoch, wenn der Test eine langandauernde, hochbelastende Hitze- bzw. Flammeinwirkung auf das zu prufende Material vorschreibt und ein Nachschwelen bzw. Nachglimmen ausgeschlossen werden soll.

Ausgehend von diesen Grundlagen liegt der vorliegenden Erfindung die Aufgabe zugrunde, ein Verfahren zur Herstellung eines flammwidrigen Schaumstoffs anzugeben, bei dem das Brennen und das Schwelen oder Nachglimmen von Schaumstoff verhindert oder zumindest wesentlich reduziert wird. Insbesondere soll dabei eine Selbstentzündung nach einem Schwelprozeß sicher vermieden werden.

Zur Lösung dieser Aufgabe ist erfindungsgemäß vorgesehen, daß dem Schaumstoff-Reaktionsgemisch Blähgraphit und Melamin in einem Verhältnis von 1:3 bis 2:3 zugemischt wird und der gemeinsame Anteil von Blähgraphit und Melamin 20 bis 40 Gew.-% des gesamten Reaktionsgemisches ausmacht.

Die synergistische Wirkung dieser beiden Materialien Blähgraphit und Melamin hat in überraschender Weise einen Schaumstoff ergeben, der einerseits in seinen physikalischen Eigenschaften wenig verändert wird, andererseits aber auch den Schaumstoff einer lang andauernden Hitze- und Flammeinwirkung standhalten läßt und ein Nachschwelen weitgehend ausschließt.

Blähgraphit allein bläht sich bei hoher thermischer Belastung auf und isoliert als Schaum gut das dahinterliegende Material. Der Nachteil besteht jedoch darin, daß für eine bereits begonnene exotherme Zersetzung des Schaums ebenfalls nur die Möglichkeit einer reduzierten Wärmeabfuhr besteht und sich diese Zersetzung deshalb bis zu einer Selbstentzündung aufschaukeln kann.

Melamin allein als Flammschutzmittel setzt einer offenen Flamme zusammen mit dem Polyurethan-Schaum nur einen geringen Widerstand entgegen und führt zum Schmelzen und meistens brennendem Abtroprn des beflammten Materials.

Im richtigen Verhältnis eingesetzt entzieht dieses Melamin jedoch hinter dem isolierenden, geblähten Graphit der exthermen Pyrolysereaktion durch Verbrauch von Wärme für den eigenen endothermen Schmelz- und Umwandlungsprozeß soviel an Wärme, daß die Pyrolyse zum Stillstand und zum Abbruch gebracht werden kann. Erfindungsgemäß wird Blähgraphit und Melamin in einem Verhältnis von 1:3 bis 2:3 zugemischt.

Dieser Abbruch der Pyrolyse wäre beim alleinigen Einsatz von Blähgraphit nur bei extrem hohen Konzentrationen möglich, die bei niedrigen Rohdichten des Schaumstoffes die physikalischen Eigenschaften des Schaumstoffs wesentlich beeinträchtigen würde.

Für eine optimale Einmischung ist es zweckmäßig, wenn bei der Herstellung des Schaumstoff-Reaktionsgemisches Blähgraphit und Melamin zunächst nur einem Teil des Polyols beigemischt werden und der restliche Polyol-Anteil die übrigen Zusatzstoffe in Form von Aktivatoren, Beschleunigern und Vernetzern enthält.

Dabei kann dem ersten Polyol-Anteil noch ein weiteres Flammschutzmittel zugesetzt werden.

Besonders zweckmäßig ist es, wenn als Polyol ganz oder teilweise ein gefülltes Polyol eingesetzt wird. Dabei kann als gefülltes Polyol z.B. ein PHD-Ether verwendet werden.

Außerdem besteht ein Vorteil bei der alleinigen Verwendung von Blähgraphit und Melamin in der Halogenfreiheit der Rauchgase und damit verminderter Toxizität und Korrosivität.

Die Rohdichte des gefüllten Schaumstoffes sollte zweckmäßigerweise 40 bis 200 kg/m³ betragen.

Nachfolgend ist anhand einer Reihe von Beispielen und Vergleichsversuchen die Auswirkung des verwendeten Flammschutzes dargestellt. Dabei sind zunächst in Tabelle I typische Rezepturen und unterschiedliche Zumischungen an Blähgraphit und Melamin angegeben, während anschließend in Tabelle II die verwendeten Rezepturen im einzelnen erläutert sind:

**Tabelle I**

| (in Gewichts-Teilen) | | | | | | |
|---|---|---|---|---|---|---|
| Rezeptur Nr. | 1 | 2 | 3 | 4 | 5 | 6 |
| Polyol a | 85 | = | = | = | = | = |
| Polyol b | 15 | = | = | = | = | = |
| Wasser | 4,02 | = | = | = | = | = |
| Aminaktivator c | 0,5 | = | = | = | = | = |
| Aminaktivator d | 0,5 | = | = | = | = | = |
| Stabilisator e | 1,2 | = | = | = | = | = |
| Isocyanat f | 31,6 | = | = | = | = | = |
| Isocyanat g | 13,5 | = | = | = | = | = |
| Blähgraphit h | 20 | 25 | 20 | 10 | 50 | 30 |
| Melamin i | 40 | 35 | 40 | 50 | 10 | - |
| Flammschutzmittel k | - | - | 5 | - | - | 15 |

**Tabelle II**

| | |
|---|---|
| Polyol a, Polyetherpolyol | z.B. Desmophen 3973 (Fa. Bayer) |
| Polyol b, gefülltes Polyetherpolyol | z.B. Desmophen 7619 (Fa. Bayer) |
| Aminaktivator c | z.B. Dabco 33LV (Fa. Air Products) |
| Aminaktivator d | z.B. Niax Al (Fa. Union Carbide) |
| Stabilisator e | z.B. B 4690 (Fa. Goldschmidt) |
| Isocyanat f | z.B. Desmodur T 65 (Fa. Bayer) |
| Isocyanat g | z.B. Desmodur 44V20 (Fa. Bayer) |
| Blähgraphit h | z.B. Type MBS (Fa. Lineta, Kopenhagen) |
| Melamin i | z.B. Type Standard (Fa. DSM) |
| Flammschutzmittel k | z.B. CR530 (Fa. Daihachi Chemical) |

Im einzelnen wurden auf einer Hochdruckdosiermaschine die folgenden drei Komponenten in den in Tabelle I angegebenen Mengen dosiert und über einen Ausstoßermischkopf vermischt und in eine geheizte Form (ca. 60°C) mit den Abmessungen 500 x 500 x 100 mm eingetragen:
1. Polyol a (ca. 2/3 der Gesamtmenge), Melamin, Blähgraphit sowie wahlweise ein Flammschutzmittel;
2. Polyol a und b (ca. 1/3 dar Gesamtmenge), Aminaktivatoran, Silikone, Wasser;
3. Isocyanat-Gemisch (TDI/MDI im Gewichtsverhältnis 70:30)

Das aus obigem Gemisch entstehende Schaumstoffteil kann aus dar Form nach 6 Minuten entnommen werden. Die Aufteilung des Polyol a in die Komponenten 1 und 2 ist im wesentlichen nur nötig, um die Viskositäten dar beiden Komponenten maschinengerecht dosieren zu können.

Dar Schaumstoff selbst, der bei allen 6 Rezepturan der gleiche ist, hat etwa die folgenden typischen physikalischen Eigenschaften:

| | |
|---|---|
| Rohdichte DIN 53420: | 80 kg/m³ |
| Zugfestigkeit DIN 53571: | 120 kPa |
| Bruchdehnung DIN 53571: | 85 % |
| Druckverformungsrest (22 h, 70°C, 50 % ) DIN 53572: | 5 % |

| Dauerschwingversuch DIN 53574: | |
|---|---|
| Härteverlust | 12 % |
| Höhenverlust | 2 % |

Auch bei Zumischung unterschiedlicher Mengen von Blähgraphit und Malamin ändern sich dann die physikalischen Eigenschaften bei den genannten Rezepturen nur wenig, da diese Stoffe im wesentlichen nicht an dar Reaktion teilnehmen.

Die so erhaltenen 6 verschiedenen Schaumstoffe sind dann verschiedenen Brandprüfungen unterzogen worden, deren Ergebnis in der nachfolgenden Tabelle III zusammengefaßt ist.

**Tabelle III**

| Ergebnisse der Brandprüfung | | | | | |
|---|---|---|---|---|---|
| Test: | Crib 4 | Crib 7 | FAR 25853 b | FAR 25853 c | UIC |
| Beispiel 1 | B. | B. | B. | B. | B. |
| 2 | B. | B. | B. | B. | B. |
| 3 | B. | B. | B. | B. | B. |
| 4 | B. | N.B. | B. | N.B. | N.B. |
| 5 | B. | N.B. | B. | B. | N.B. |
| 6 | B. | N.B. | B. | B. | N.B. |
| B. = Bestanden N.B. = Nicht bestanden | | | | | |

Der Test Crib 4 und Crib 7 entspricht dem British Standard 5852 Part 2., bei dem eine auf das zu untersuchende Material aufgestapelte Holzkrippe abgebrannt und das Brandverhalten des darunter befindlichen Materials beurteilt wird. Entsprechend vorgegebener Spezifikationen kann dann dieser Test als "Bestanden" oder "Nicht bestanden" gelten. Der Test Crib 7 entspricht einer höheren Anforderung, da die Zündquelle spezifikationsgemäß eine höhere Masse aufweist.

Bei den Tests FAR 25853 b und c handelt es sich um den Bunsenbrenner- und den Kerosinbrennertest, bei dem das Material aus kurzer Entfernung mit einer sehr heißen und intensiven Flamme über einen vorgegebenen Zeitraum beflammt wird. Nach diesem intensiven Beflammen soll der Verlust von Gewicht des Schaumstoffs weniger als 10 % betragen und die Brandausbreitung spezifikationsgemäß begrenzt sein.

Bei dem Test UIC handelt es sich um ein Testverfahren der Union International de Chemin de Fère, wonach 100 g Papier als Kissen zusammengeballt auf dem zu untersuchenden Material verbrannt werden.

Wie sich aus diesen Versuchen der Brandprüfung ergibt, haben die Schaumstoffe, die Blähgraphit und Melamin im erfindungsgemäßen Verhältnis enthalten, alle Brandtest bestanden.

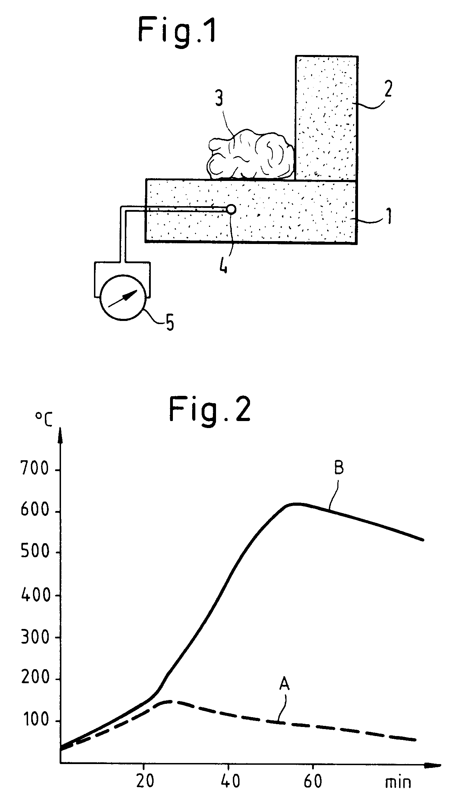

Ergänzend dient zur Veranschaulichung der Wirkungsweise der erfindungsgemäß hergestellten Schäume eine Versuchsanordnung, wie sie der UIC-Test vorschreibt und wie sie in Fig. 1 dargestellt ist. Dabei wird auf zwei senkrecht zueinander angeordneten Prüfkörpern 1 und 2 des jeweiligen Schaumstoffs zunächst die als Kissen 3 zusammengeballte Menge von 100 g Papier aufgelegt, die dann abgebrannt wird. Vor Beginn des Brandversuchs wird ein Thermoelement 4 in die Mitte des unteren Prüfkörpers 1 eingeschoben und mit dem Meßgerät 5 der Temperaturverlauf über einen Zeitraum von 60 Min. gemessen.

Die Meßwerte sind in dem Diagramm nach Fig. 2 aufgetragen. Dabei zeigt die gestrichelte Temperaturkurve A den Temperaturverlauf von nach den Beispielen 1 bis 3 hergestellten Schaumkörpern, während die ausgezogene Temperaturkurve B den Verlauf eines nach Beispiel 5 oder 6 hergestellten Vergleichsschaums angibt.

Wie man aus dem Diagramm ersieht, wurde bei den Schaumkörpern nach den Beispielen 1 bis 3 lediglich ein Temperaturanstieg von Raumtemperatur auf ca. 160 bis 170°C registriert, während bei den Vergleichsschäumen gem. Beispiel 5 und 6 eine Ausbreitung des exothermen pyrolytischen Abbaus mit einem Temperaturanstieg bis zu 650°C, zum Teil mit Selbstentzündung, zu beobachten war.

Damit ist eindeutig der Vorteil des erfindungsgemäßen Verfahrens und die synergistische Wirkung des Zufügens von Blähgraphit und Melamin im beanspruchten Verhältnis nachgewiesen.

## Patentansprüche

1. Verfahren zur Herstellung eines flammwidrigen, elastischen Polyurethan-Weichschaumstoffes aus einem Schaumstoff-Reaktionsgemisch mit Polyol und Polyisocyanat sowie einem Anteil an Blähgraphit in einer Korngröße von 0.2-1mm als flammhemmendes Mittel, dadurch gekennzeichnet, daß dem Schaumstoff-Reaktionsgemisch Blähgraphit und Melamin in einem Verhältnis von 1:3 bis 2:3 zugemischt wird und der gemeinsame Anteil von Blähgraphit und Melamin 20 bis 40 Gew.-% des gesamten Reaktionsgemisches ausmacht.

2. Verfahren nach Anspruch 1, dadurch gekennzeichnet, daß bei der Herstellung des Schaumstoff-Reaktionsgemisches Blähgraphit und Melamin zunächst nur einem Teil des Polyols beigemischt werden und der restliche Polyol-Anteil die übrigen Zusatzstoffe in Form von Aktivatoren, Beschleunigern und Vernetzern enthält.

3. Verfahren nach Anspruch 2, dadurch gekennzeichnet, daß dem ersten Polyolanteil ein weiteres Flammschutzmittel zugesetzt wird.

4. Verfahren nach einem der Ansprüch 1 bis 3, dadurch gekennzeichnet, daß als Polyol ganz oder teilweise gefülltes Polyol eingesetzt wird.

5. Verfahren nach Anspruch 4, dadurch gekennzeichnet, daß als gefülltes Polyol ein PHD-Ether verwendet wird.

6. Verfahren nach einem der Ansprüche 1 bis 5, dadurch gekennzeichnet, daß die Rohdichte des gefüllten Schaumstoffes 40 bis 200 kg/m³ beträgt.

## Claims

1. Process for preparing a flame-resistant, elastic polyurethane flexible foamed material comprising a foamed material reaction mixture with polyol and polyisocyanate and a portion of expanded graphite with a grain size of between 0.2 and 1 mm as a flame-retardant, characterized in that expanded graphite and melamine are added to the foamed material reaction mixture in a ratio of between 1:3 and 2:3 and the common portion of expanded graphite and melamine constitutes 20 to 40 weight percent of the entire reaction mixture.

2. Process according to Claim 1, characterized in that when the foamed material reaction mixture is prepared expanded graphite and melamine are firstly added only to some of the polyol and the remaining polyol portion contains the other additives in the form of activators, accelerators and crosslinking agents.

3. Process according to Claim 2, characterized in that a further flame-protection agent is added to the first polyol portion.

4. Process according to any one of Claims 1 to 3, characterized in that completely or partially filled polyol is used as polyol.

5. Process according to Claim 4, characterized in that a PHD ether is used as filled polyol.

6. Process according to any one of Claims 1 to 5, characterized in that the apparent density of the filled foamed material is 40 to 200 kg/m³.

## Revendications

1. Procédé pour la production d'une mousse souple ininflammable élastique en polyuréthane à partir d'un mélange réactionnel moussant contenant du polyol et du polyisocyanate, ainsi qu'une part de graphite expansé d'une grosseur de grain de 0,2 à 1 mm en tant qu'agent retardateur de combustion, caractérisé en ce que l'on ajoute au mélange réactionnel moussant du graphite expansé et de la mélamine dans une proportion de 1:3 et 2:3, et en ce que la part commune de graphite expansé et de mélamine représente 20 à 40 % en poids du mélange réactionnel total.

2. Procédé selon la revendication 1, caractérisé en ce que lors de la production du mélange réactionnel moussant, on ajoute du graphite expansé et de la mélamine tout d'abord uniquement à une partie du polyol, et en ce que la partie restante du polyol contient les autres additifs en forme d'activateurs, d'accélérateurs et d'agents de réticulation.

3. Procédé selon la revendication 2, caractérisé en ce que l'on ajoute à la première partie de polyol un autre agent anti-inflammation.

4. Procédé selon l'une quelconque des revendications 1 à 3, caractérisé en ce que l'on utilise, en tant que polyol, en totalité ou en partie du polyol avec des additifs de remplissage.

5. Procédé selon la revendication 4, caractérisé en ce que l'on utilise, en tant que polyol avec additif de remplissage, un éther PHD.

6. Procédé selon l'une quelconque des revendications 1 à 5, caractérisé en ce que la densité de la mousse avec additif de remplissage est de 40 à 200 kg/m³.
